# EUROPEAN PATENT SPECIFICATION

(11) **EP 4 276 439 B1**
(45) Date of publication and mention of the grant of the patent: **02.04.2025**
(21) Application number: 22755592.7
(22) Date of filing: 18.02.2022
(51) Int. Cl.: G01N 1/10, G01K 13/12, B26D 7/00, G01N 1/12, G01N 1/28

(54) **AUTOMATIC SEPARATION DEVICE, AND USE METHOD THEREOF**
AUTOMATISCHE TRENNVORRICHTUNG UND VERWENDUNGSVERFAHREN DAFÜR
DISPOSITIF DE SÉPARATION AUTOMATIQUE ET PROCÉDÉ D'UTILISATION DE CELUI-CI

(30) Priority: 20.02.2021 CN 202110193177
(43) Date of publication of application: 15.11.2023
(73) Proprietor: BAOSHAN IRON & STEEL CO., LTD., Shanghai 201900 (CN)
(72) Inventor: DING, Ye, Shanghai 201900 (CN); WU, Ruimin, Shanghai 201900 (CN); YE, Changhong, Shanghai 201900 (CN); SHEN, Chen, Shanghai 201900 (CN)
(74) Representative: Maiwald GmbH
(86) International application number: PCT/CN2022/076885
(87) International publication number: WO 2022/174819

(56) References cited:
- WO-A1-2020/038662
- WO-A1-2020/038662
- CA-A- 1 131 049
- CN-A- 104 359 710
- CN-A- 110 231 195
- CN-A- 110 231 195
- CN-A- 111 426 528
- CN-A- 111 426 528
- CN-A- 111 426 529
- CN-U- 203 545 142
- CN-U- 203 545 142
- CN-U- 212 780 069
- DE-A1- 19 654 522
- FR-A1- 2 546 298
- GB-A- 1 426 205
- GB-A- 1 579 952
- GB-A- 1 579 952
- JP-A- H0 480 310
- JP-A- H05 164 474
- JP-A- S59 109 838
- KR-A- 20130 068 914
- US-A- 4 037 478
- US-A- 4 250 754
- US-A- 4 380 937
- US-A- 4 499 777
- ZHANG YUHAI, LI SHUQING: "Development and Application of Submerged Deoxidized Molten Steel Sampler", TIANJIN YEJIN = TIANJIN METALLURGY, TIANJIN SHI JINSHU XUEHUI, CN, no. 3 (115), 1 June 2003 (2003-06-01), CN , pages 13 - 15,61, XP055961243, ISSN: 1006-110X

## Description

### TECHNICAL FIELD

The present invention relates to the technical field of metallurgy, in particular to a sampling probe, an automatic separation device, and a use method thereof.

### BACKGROUND

In metallurgical production, it is necessary to determine the variety and quantity of additives and the end point of smelting according to the temperature, carbon content and other chemical compositions of molten metal in the molten pool. In order to accurately obtain the content of these chemical compositions, samples need to be taken and sent to the laboratory for analysis by means of a pneumatic sample sending device. At present, the smelting area is mostly measured by mounting a composite probe for temperature measurement and sampling on a temperature measuring gun and then manually inserting the temperature measuring gun into smelting liquid. With regard to the separation operation of the probe sample after sampling, it is usually adopted in a manual manner in the prior art, thus restricting the overall automation level of the smelting area.

The outer side of the currently used sampling probe consists of a tubular paper housing, and the inner side of the probe has various forms according to different metal sample mold boxes. One of the more common forms is a cylindrical flat sample, and a housing of a mold box for the sample is of a two-piece structure which is fixed into a whole by a metal clamp. This metal clamp is used to ensure that the two-piece mold box housing is always kept in the combined state in the process that the sampled molten metal is solidified therein, so that the obtained solidified sample of the molten metal is a regular cylinder with no burr at the edge.

Chinese patent CN203545142U discloses a device for automatically exposing a sample, wherein a probe is first fixed by a supporting device on its outer surface, the probe with the sample is partitioned by a partitioning device, and the sample with a housing is squeezed out from the partitioned area of the probe by means of a punch. A filling material including the housing and the sample is introduced into a housing dismantling device through an introduction device, wherein the housing includes a clamp for keeping the sample housing closed while sampling. The housing dismantling device includes a bottom plate, a vibration motor, a centrifugal device, a colliding body, and the like. The bottom plate inclines downwards, and the bottom of the bottom plate is provided with the vibration motor. By means of the vibration of the bottom plate, the sample is moved towards the centrifugal device in the housing dismantling device. The gap below the centrifugal device is sized only to pass the separated sample and housing, and the unseparated sample and housing obtains an impulse towards the colliding body by the centrifugal device. By the collision of the colliding body, the object will be disassembled in most cases. The disassembled sample, housing and filling material pass through the gap below the centrifugal device to move towards a sample extraction area. Before reaching the sample extraction area, the disassembled sample, housing and filling material are blocked by a blocking layer on which a channel for the housing and the filling material is arranged, so that the housing and the filling material are separated through the channel, and the sample cannot pass through the channel due to its size, therefore the sample is guided by the blocking layer and finally enters the sample extraction area. The device has a large number of actuation mechanisms, complex structure, high cost, heavy post-maintenance work and the reliability is difficult to guarantee. The method of enabling the housing component with the clamp to hit the colliding body by means of the centrifugal device can only ensure that the sample is separated from the housing in most cases, but it is difficult to deal with a situation when the clamp is assembled too tight and difficult to separate the sample from the housing. Moreover, the device has no constraint on the posture of each component, so that jamming at the gap between the centrifugal device and the bottom plate will easily occur due to arbitrary postures of the components.

Patent WO2020/038662A1, CN111426528A, and CN203545142U disclose sampling probes, separation devices and methods for automatically separating metal samples from the sampling probes.

### SUMMARY

In view of the above-mentioned deficiencies in the prior art, an objective of the present invention is to provide a sampling probe, an automatic separation device, and a use method thereof, which can not only effectively solve the problem of hard separation between the sample and the housing, but also avoid the jamming between the actuation mechanism and the components by the constraint on the posture of each component.

According to the present invention is provided an automatic separation device for a sampling probe comprising a probe tail area and a probe sampling area connected to a top of the probe tail area, wherein the probe sampling area comprises a housing, a two-piece mold housing component being disposed in the housing, and a sample being disposed inside the two-piece mold housing component, and wherein the two-piece mold housing component is wound and fixed by an adhesive tape capable of burning and melting,the automatic separation device comprising a cutting device for cutting the probe sampling area in the sampling probe, and an inclined bottom plate, wherein the inclined bottom plate is inclined downward from the front end to the rear end, with the front end of the inclined bottom plate being close to the cutting device and the rear end of the inclined bottom plate being placed away from the cutting device;characterised in that a first posture adjustment device, a first separation device, a second posture adjustment device, and a second separation device are sequentially arranged between the front end of the inclined bottom plate and the rear end of the inclined bottom plate, and in that the first posture adjustment device, the first separation device, the second posture adjustment device, and the second separation device are mounted on the upper surface of the inclined bottom plate.

The cutting device is used for cutting the probe sampling area containing the sample and the two-piece mold housing component from the sampling probe, and a cutting plane of the cutting device is located at an opening of a guide channel for the flat cylindrical sample and the two-piece mold housing component, and is tangent to the side face of a cylinder formed when the two-piece mold housing component is in a combined state.

Preferably, the first posture adjustment device includes at least two collision points that are sequentially disposed in the direction from the front end of the inclined bottom plate to the rear end of the inclined bottom plate, or at least two collision points are sequentially disposed on the upper surface of the inclined bottom plate from the upper end to the lower end; and/or
an optional range of the cutting device includes, but is not limited to, a shearing device, a squeezing device or a sawing device.

Preferably, the collision points include a turnover collision point and a constraining collision point; wherein
the turnover collision point is used for abutting against the end face of the probe sampling area falling onto the inclined bottom plate after cutting, and the constraining collision point is used for abutting against the peripheral side of the probe sampling area; that is to say, after being sheared by the cutting device, the probe sampling area is separated from the sampling probe and enters an area where the inclined bottom plate is located. The turnover collision point can abut against the end face of the probe sampling area, and the constraining collision point can abut against the peripheral side of the probe sampling area.

Preferably, the distance between the turnover collision point and the constraining collision point on the upper surface of the inclined bottom plate is not smaller than the radius of the end face of the probe sampling area. This solution is adopted so that it is possible to constrain the probe sampling area from rushing out of the inclined bottom plate after collision. If the distance between the turnover collision point and the constraining collision point on the upper surface of the inclined bottom plate is smaller than the radius of the end face of the probe sampling area, the probe sampling area will be subjected to a component force opposite to the direction of gravity during collision, causing the probe sampling area to rush out in a suspended manner.

Preferably, the first separation device includes a first side plate, a second side plate and a turnover plate; wherein
the first side plate and the second side plate are connected to the upper surface of the inclined bottom plate, thereby forming a first chute. That is to say, the channel formed among the first side plate, the second side plate and the inclined bottom plate is referred to as the first chute;
the inclined bottom plate located in the first chute is provided with a drop opening, and the turnover plate is connected to the lower surface of the inclined bottom plate and can partially or completely cover the drop opening;
the first chute is arranged as a structure that gradually becomes smaller in a direction from the front end to the rear end of the inclined bottom plate, and the minimum size of the outlet of the first chute is greater than the maximum size of the two-piece mold housing component and smaller than the cross-sectional diameter of the probe sampling area. That is to say, the distance between a third side plate and a fourth side plate at the outlet of the first chute is greater than the maximum size of the two-piece mold housing component and smaller than the cross-sectional diameter of the housing of the probe sampling area, so that the two-piece mold housing component can smoothly pass through the outlet of the first chute, and the housing of the probe sampling area is intercepted.

Preferably, the height of the first side plate and the height of the second side plate are both greater than the cross-sectional radius of the housing of the probe sampling area to prevent the housing of the probe sampling area from being overturned out of the first chute.

Preferably, the second posture adjustment device includes a second chute, and the inlet of the second chute communicates with the outlet of the first chute.

Preferably, the inner side wall of the second chute is set as a curved surface with angle changes so as to guide the two-piece mold housing component and the sample therein to gradually change from a lying position when entering the second chute to a state of rolling upright along the side face. The specific shape of the second chute is not particularly limited as long as the above objective can be achieved.

Preferably, the second separation device includes the third side plate, the fourth side plate and a sample extraction area; wherein
the third side plate and the fourth side plate are connected to the upper surface of the inclined bottom plate, thereby forming a third chute;
the inlet of the third chute communicates with the outlet of the second chute;
the sample extraction area is located at the lower position of the third chute, or at the tail of the third chute.

Preferably, the third chute is arranged as a structure that gradually becomes larger in the direction from the front end to the rear end of the inclined bottom plate, and the inclination angles of the third side plate and the fourth side plate gradually increase in the direction from the front end to the rear end of the inclined bottom plate. Specifically, the third side plate and the fourth side plate are gradually overturned outwards from the front end to the rear end, or the inclination angles of the third side plate and the fourth side plate with respect to the opposite directions gradually increase.

Preferably, the size of the inlet of the third chute is greater than the height of the cylinder formed when the two-piece mold housing component is in the combined state, and smaller than the diameter of the cylinder formed when the two-piece mold housing component is in the combined state. Or, the distance between the third side plate and the fourth side plate at the inlet of the third chute is greater than the height of the cylinder formed when the two-piece mold housing component is in the combined state, and smaller than the diameter of the cylinder formed when the two-piece mold housing component is in the combined state so as to guide the two-piece mold housing component to roll along the side face of the cylinder.

Preferably, the turnover plate is connected to the lower surface of the inclined bottom plate by an adjustable hinge.

Preferably, the lower end (or tail) of the third chute is further provided with a partitioning plate.

Preferably, the lower end of the third chute (or the position close to the tail) is provided with a rectangular opening, and the rectangular opening is provided with a blocking plate on its edge close to the sample extraction area, that is, the end of the rectangular opening is provided with a blocking plate.

Preferably, the inclined bottom plate includes a first inclined bottom plate and a second inclined bottom plate connected to the rear end of the first inclined bottom plate.

Preferably, the inclination angle of the inclined bottom plate is 30°. Alternatively, when the sampling probe automatic separation device is horizontally placed, the included angle between the inclined bottom plate and the horizontal direction is 30°, so as to guide the sample to move on the automatic separation device from the front end to the rear end. Moreover, in embodiments having a plurality of inclined bottom plates, the inclined bottom plates can have different inclination angles.

In yet another aspect, provided is a use method of the automatic separation device, which includes the following steps:
1) keeping the axial centerline of the sampling probe perpendicular to the acting direction of the cutting device, or keeping the axis of the sampling probe perpendicular to the cutting plane of the cutting device;
2) measuring and adjusting the positional relationship between the sampling probe and the cutting device with reference to one end of the sampling probe, and marking and recording the position of the sampling probe after adjustment; the marking and recording means that the internal structure of the sampling probe is known, and the positional relationship between the sampling probe and the cutting device is measured and adjusted with reference to the sampling end of the sampling probe, so that the cutting plane of the cutting device is located at a position tangent to the side face of the cylinder formed when the two-piece mold housing component is in the combined state;
3) preliminarily determining a mounting position of the first posture adjustment device on the inclined bottom plate according to the position of the sampling probe cut by the cutting device;
4) adjusting the inclination angle of the inclined bottom plate;
5) repeatedly cutting multiple sampling probes having the same specifications by the cutting device, and adjusting the first separation device, the second posture adjustment device and the second separation device; and
6) determining a final mounting position after the adjusting step in step 5) is completed, thereby obtaining the automatic separation device.

Preferably, the adjusting in step 5) specifically includes the following steps:
5.1) observing the collision position of the probe sampling area cut from the sampling probe, adjusting the first posture adjustment device so that the constraining collision point thereon is located at the side of the probe sampling area, and then finely adjusting the position of the constraining collision point on the first separation device according to the position of the probe sampling area colliding with the first chute;
5.2) the drop opening is opened for observing the separation of the two-piece mold housing component and the sample within the drop opening; and
5.3) observing the motion states of the two-piece mold housing component and the sample in the second posture adjustment device and the second separation device, and adjusting the second posture adjustment device and the second separation device until the two-piece mold housing component and the sample are successfully separated from the third chute.

Preferably, in step 4), the inclination angle of the inclined bottom plate is adjusted to 30°.

The sampling probe, the sample automatic separation device and the use method thereof provided by the present invention further have the following beneficial effects:
1) the automatic separation device of the present invention makes full use of the own gravity action of the probe, and realizes the automatic separation of the probe from the sample by guiding and restricting its movement and posture;
2) the automatic separation device of the present invention has fewer actuation mechanisms, simple structure, low cost, and is easy to maintain, which effectively avoids the jamming between the components with the actuating mechanisms caused by difficult posture constraints of the components;
3) the sampling probe of the present invention employs a two-piece mold housing component wound by an adhesive tape capable of burning and melting, which meets the requirements that the housing is kept in a combined state during sampling, and since the adhesive tape used to fix the housing component is burnt and melted by the action of metal at a high temperature after the sampling, the problem of the prior art that it is difficult to separate the housing from the sample caused by the overtightening of the fixing clamp is solved.

### BRIEF DESCRIPTION OF THE DRAWINGS

Fig. 1 is a structural schematic diagram of a sampling probe according to the present invention;
Fig. 2 is a structural schematic diagram of a two-piece mold housing component disposed in a housing and a sample disposed in the two-piece mold housing component of a probe sampling area in a sampling probe according to the present invention;
Fig. 3 is a structural schematic diagram of an automatic separation device according to the present invention;
Fig. 4 is a schematic diagram of a constraining collision point and a turnover collision point on a first posture adjustment device in an automatic separation device according to the present invention;
Fig. 5 is a structural schematic diagram of a first separation device in an automatic separation device according to the present invention;
Fig. 6 is a structural schematic diagram of a second posture adjustment device in an automatic separation device according to the present invention;
Fig. 7 is a schematic diagram of a first embodiment of a second separation device of an automatic separation device according to the present invention;
Fig. 8 is a schematic diagram of a second embodiment of a second separation device of an automatic separation device according to the present invention; and
Fig. 9 is a schematic diagram of a movement track of a probe sampling area in a sampling probe according to the present invention along an automatic separation device according to the present invention.

### DETAILED DESCRIPTION

In order to be able to better understand the above technical solutions of the present invention, the technical solutions of the present invention will be further explained in conjunction with the accompanying drawings and the embodiments.

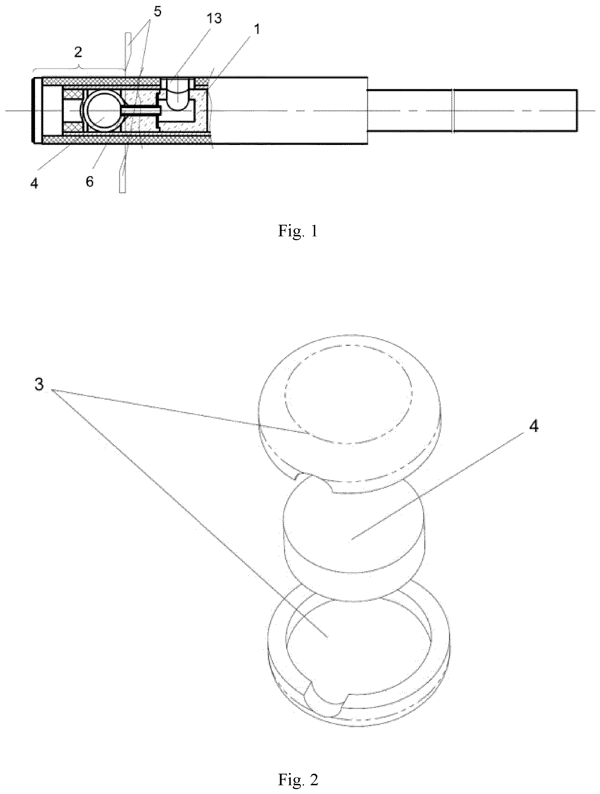

Referring to Figs. 1 and 2, a sampling probe provided by the present invention includes a probe tail area 1 and a probe sampling area 2 connected to the top of the probe tail area 1; the probe sampling area 2 includes a paper housing, a two-piece mold housing component 3 disposed in the paper housing, and a sample 4 disposed in the two-piece mold housing component 3; the two-piece mold housing component 3 is wound and fixed by an adhesive tape capable of burning and melting.

In an automatic separation device of the present invention, the cutting device 5 places the sampling probe, whose sampling is completed, in a direction perpendicular to the acting direction of the cutting device 5 in Fig. 1, so as to cut the sampling probe into two parts, i.e., the probe tail area 1 and the probe sampling area 2. The cutting plane formed by the acting direction of the cutting device 5 is located at the guide channel 6 of the flat cylinder and the two-piece mold housing component 3 and is tangent to the cylindrical side face formed when the two-piece mold housing component 3 is in the combined state. The function of the cutting device 5 is to extrude and deform the paper housing of the sampling probe, and the deformed opening shape is favorable for the two-piece mold housing component 3 and the sample 4 to fall out.

The two-piece mold housing component 3 is wound and fixed by an adhesive tape capable of burning and melting during assembly, and during sampling, the two-piece mold housing component 3 is kept in the combined state under the action of the adhesive tape capable of burning and melting; after the sample 4 is taken, the adhesive tape capable of burning and melting is burned and melted by molten metal, and then, the molten metal entering the two-piece mold housing component 3 through the guide channel 6 is solidified into a solid state. By the action of the cutting device 5, the sample 4 in the two-piece mold housing component 3 and shank-shaped metal formed by the high-temperature metal flowing through the guide channel 6 will be broken and separated, and the sample 4 is a regular flat cylinder.

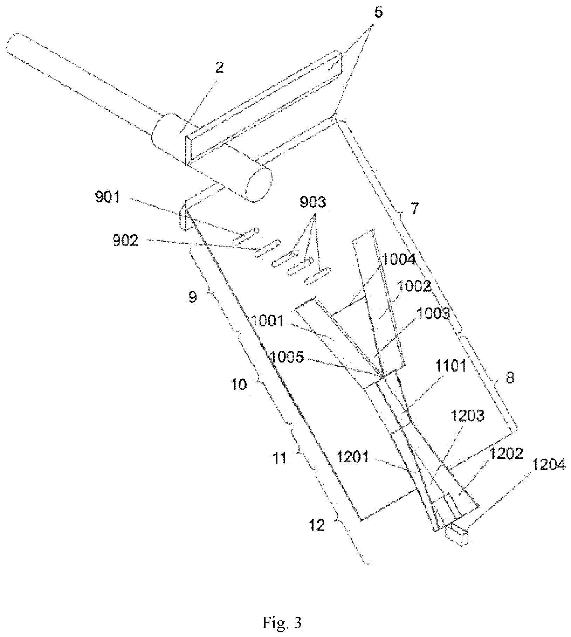

As shown in Fig. 3, a sampling probe automatic separation device provided by the present invention includes a cutting device 5 for cutting a sampling probe, and an inclined bottom plate located downstream of the cutting device 5.

The inclined bottom plate inclines downwards from the front end to the rear end, the upper end (i.e., the front end) of the inclined bottom plate is placed close to the cutting device 5; the lower end (i.e., the rear end) of the inclined bottom plate is far away from the cutting device 5 and is lower than the horizontal plane where the front end is located.

Preferably, the downward inclination angle of the inclined bottom plate is 30°, i.e., the included angle between the inclined bottom plate and the horizontal plane is 30°.

In some embodiments, the inclined bottom plate can include a first inclined bottom plate 7, and a second inclined bottom plate 8 connected to the lower end (or the rear end) of the first inclined bottom plate 7. In this embodiment, the first inclined bottom plate 7 and the second inclined bottom plate 8 are the same plate.

A first posture adjustment device 9, a first separation device 10, a second posture adjustment device 11 and a second separation device 12 are sequentially arranged between the upper end of the inclined bottom plate and the lower end of the inclined bottom plate.

After the sampling probe is cut by the cutting device 5, the probe sampling area 2 falls onto the first inclined bottom plate 7, and the probe sampling area 2 changes from horizontal state to a state of sliding down along the first inclined bottom plate 7.

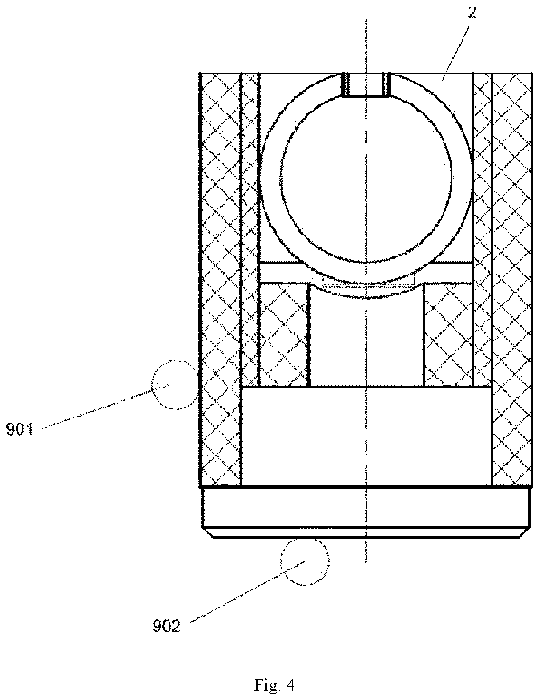

The first posture adjustment device 9 includes a constraining collision point 901 (the constraining collision point 901 in this embodiment is a slender rod), a turnover collision point 902 (the turnover collision point 902 in this embodiment is also a slender rod) and a plurality of guide points 903 (the guide point 903 in this embodiment is a guide rod, i.e., slender rod, which can play a role in guiding according to the set position), which are arranged in sequence from the upper end of the inclined bottom plate to the lower end of the inclined bottom plate and are all mounted on the upper surface of the first inclined bottom plate 7. In this embodiment, the turnover collision point 902 provides one turnover collision point, and the constraining collision point 901 provides one constraining collision point, but the present application does not limit the number of turnover collision points and constraining collision points. The slid down end face of the probe sampling area 2 collides with the turnover collision point 902 (as shown in Fig. 4), and the side face of the probe sampling area 2 collides with the constraining collision point 901 and then is laterally overturned so that the open side of the two-piece mold housing component 3 with the sample 4 gradually faces downwards and is guided by the guide points 903 to fall into the first separation device 10.

The first separation device 10 includes a first side plate 1001, a second side plate 1002 and a turnover plate 1003.

The first side plate 1001 and the second side plate 1002 are mounted on the upper surface of the first inclined bottom plate 7, thereby forming a first chute 1005;
the first inclined bottom plate 7 under the first side plate 1001 and the second side plate 1002 where the first chute 1005 is located is provided with a drop opening 1004, the turnover plate 1003 is connected to the lower surface of the inclined bottom plate and covers the drop opening 1004, and the size of the drop opening 1004 ensures the probe sampling area 2 to pass smoothly.

The first chute 1005 is arranged as a structure that gradually becomes smaller, the minimum size of an outlet at the lower part of the first chute 1005 is greater than the maximum size of the two-piece mold housing component 3 and smaller than the cross-sectional diameter of the probe sampling area 2, so as to separate the paper housing of the probe sampling area 2 from the two-piece mold housing component 3 inside the paper housing.

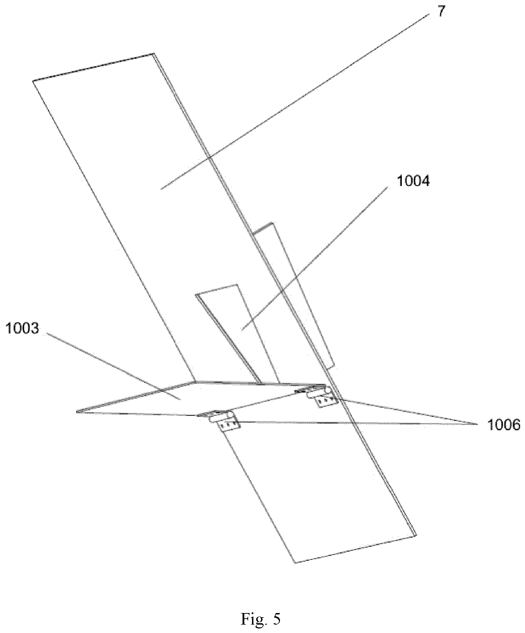

A drop opening 1004 is formed between the first side plate 1001 and the second side plate 1002, and an outlet of the first chute 1005 is formed between the lower end of the first side plate 1001 and the lower end of the second side plate 1002. The turnover plate 1003 is connected to the lower surface of the first inclined bottom plate 7 by an adjustable hinge 1006 and can cover the position of the drop opening 1004 (as shown in Fig. 5).

The probe sampling area 2, which is laterally overturned with the open side facing gradually downwards, rushes into the first chute 1005 due to inertia, at this moment, there is no force between the probe sampling area 2 and the first inclined bottom plate 7. The open side of the probe sampling area 2 collides with the side plates at the outlet at the lower part of the first chute 1005, and the probe sampling area 2 intercepted in the first chute as its size cannot pass through the outlet of the first chute 1005; the sample 4 of the probe sampling area 2 and the two-piece mold housing component 3 can then continue to rush out of the outlet at the lower part of the first chute 1005. The paper housing of the probe sampling area 2, by its own gravity action, enables the turnover plate 1003 mounted to the lower surface of the first inclined bottom plate 7 to be overturned downward and passes through the drop opening 1004 to fall out of the separation device, so that the separation of the paper housing of the probe sampling area 2 from the sample 4 and the two-piece mold housing component 3 is completed.

The heights of the first side plate 1001 and the second side plate 1002 should be at least greater than the cross-sectional radius of the probe sampling area 2, so as to prevent the probe sampling area 2 from being directly overturned out of the first side plate 1001 and the second side plate 1002 due to inertia.

The second posture adjustment device 11 includes a second chute 1101 mounted on the upper surface of the second inclined bottom plate 8 and used for adjusting the postures of the sample 4 and the two-piece mold housing component 3. The inner wall of the second chute 1101 is arranged as a curved surface 1102 with varying angles, and an inlet 1103 of the second chute 1101 communicates with the outlet of the first chute 1005. The sample 4 and the two-piece mold housing component 3 sliding off from the first chute 1005 pass through the second chute 1101 to be adjusted stepwise from an arbitrary posture to a near upright state, i.e., a state of rolling along the side of the mold housing component 3, and enter the second separation device 12.

The second separation device 12 includes a third side plate 1201 with an inclination angle and a fourth side plate 1202 with inclination angle, and a third chute 1203 is formed between the third side plate 1201 and the fourth side plate 1202.

The third side plate 1201 and the fourth side plate 1202 are connected to the upper surface of the second inclined bottom plate 8, the upper ends of the third side plate 1201 and the fourth side plate 1202 are arranged facing the upper end of the inclined bottom plate, and the lower ends of the third side plate 1201 and the fourth side plate 1202 are arranged facing the lower end of the inclined bottom plate. The third side plate and the fourth side plate are gradually outwards overturned in the direction from the front end of the inclined bottom plate to the rear end (or the angles of inclination of the third side plate and the fourth side plate in opposite directions gradually increase). The distance between the third side plate 1201 and the fourth side plate 1202 gradually becomes larger from the front end to the rear end.

An inlet of the third chute 1203 communicates with an outlet 1105 of the second chute 1101, and the size of the inlet of the third chute 1203 should be greater than the height of a cylinder formed when the two-piece mold housing component 3 is in the combined state and smaller than the diameter of the cylinder formed when the two-piece mold housing component 3 is in the combined state.

The sample 4 is a standard flat cylinder, which is in an upright state when entering the second separation device 12, then rolls and slides along a straight line in the third chute 1203, and is always located at the centerline position of the third chute 1203, whereas due to having a chamfer, the two-piece mold housing component 3 gradually changes from an upright state to a state of rolling along the third side plate 1201 and the fourth side plate 1202 during sliding. Since the angles of outward inclination of the third side plate 1201 and the fourth side plate 1202 gradually increase, and the third chute 1203 gradually widens from the front end to the rear end, the two-piece mold housing component 3 will gradually deviate from the centerline of the third chute 1203, and the distance between the two-piece mold housing component 3 and the sample 4 is larger and larger until the two-piece mold housing component 3 and the sample 4 are completely separated, then the sample 4 falls into a sample extraction area 1204 located at the outlet of the third chute 1203.

Referring again to Fig. 4, the distance between the turnover collision point provided by the turnover collision point 902 and the constraining collision point provided by the constraining collision point 901 and the first inclined bottom plate 7 is not smaller than the radius of the end face of the probe sampling area 2; if the probe sampling area 2 is divided into left and right areas as shown in Fig. 4 with reference to an axial section perpendicular to the first inclined bottom plate 7, the turnover collision point and the constraint collision point should be located in the same area.

Referring again to Fig. 5, the lower surface of the first inclined bottom plate 7 at the drop opening 1004 is provided with a downwards overturned turnover plate 1003 by means of an adjustable hinge 1006. The probe sampling area 2, which rushes into the first chute 1005 by inertia, collides with the outlet at the lower part of the first chute 1005. the sample 4 and the two-piece mold housing component 3 slide into the second chute from the outlet, and the paper housing of the probe sampling area 2 can overturn the turnover plate 1003 downwards by its own gravity, so as to fall out from the drop opening 1004 to complete the separation of the paper housing of the probe sampling area 2 from the sample 4 and the two-piece mold housing component 3. In addition to realizing the overturning of the turnover plate 1003 through the adjustable hinge 1006, the opening and closing of the turnover plate 1003 can be controlled by means of an air cylinder. Furthermore, due to its own inertia, the probe sampling area 2 will not fall out of the drop opening 1004 since there is no force acting between the probe sampling area 2 and the first inclined bottom plate 7 before the probe sampling area 2 collides with the outlet of the first chute 1005, so that the turnover plate 1003 can be omitted in some embodiments.

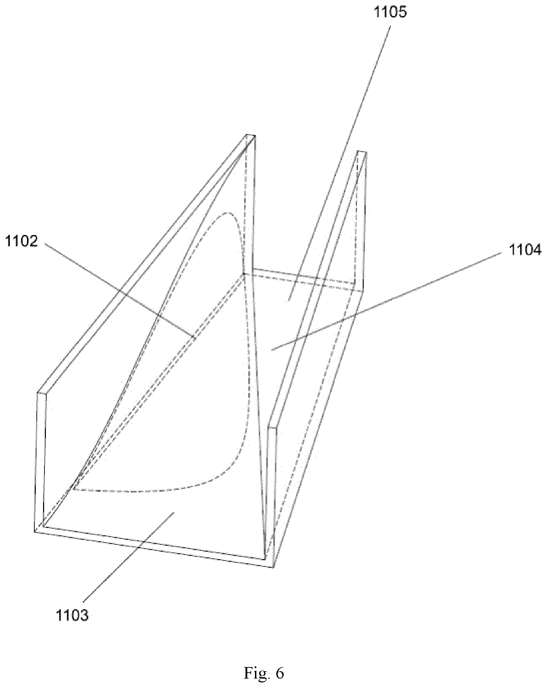

Referring to Fig. 6, the inner wall of the second chute 1101 is set as a curved surface 1102 with varying angles, the curved surface 1102 is parallel to a bottom plate 1104 of the second chute 1101 at the inlet 1103 of the second chute 1101, and the curved surface 1102 is perpendicular to the bottom plate 1104 of the second chute 1101 at the outlet 1105 of the second chute 1101.

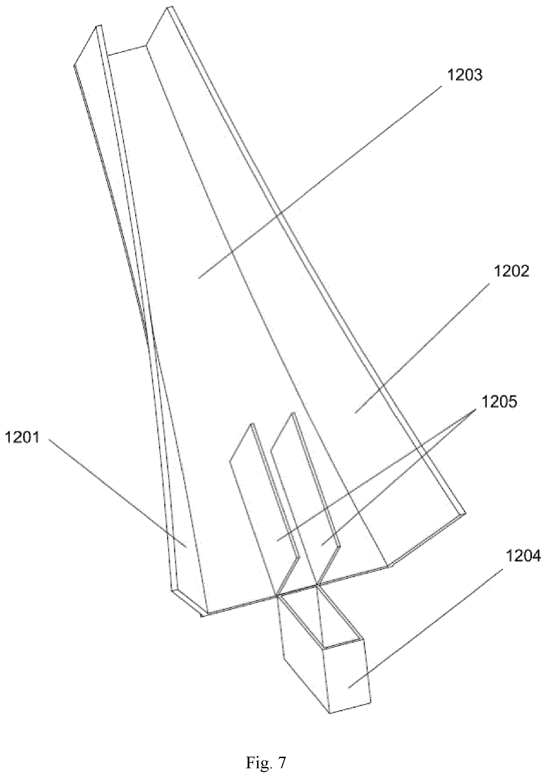

Referring to Fig. 7, in which a first embodiment of the third chute 1203 is shown. Two partitioning plates 1205 are mounted on the inclined bottom plate at the outlet position of the third chute 1203. The sample extraction area 1204 is located at the end of the outlet position of the third chute 1203 and located between the two partitioning plates 1205. The sample 4 rolls and slides along a straight line on the centerline of the third chute 1203, slides into the channel between the two partitioning plates 1205 and falls into the sample extraction area 1204 below, whereas due to having a chamfer, the two-piece mold housing component 3 will roll against the third side plate 1201 and the fourth side plate 1202, slides into the channel between the partitioning plates 1205 and the third side plate 1201 and the channel between the partitioning plates 1205 and the fourth side plate 1202, and falls into a mold housing component collection area.

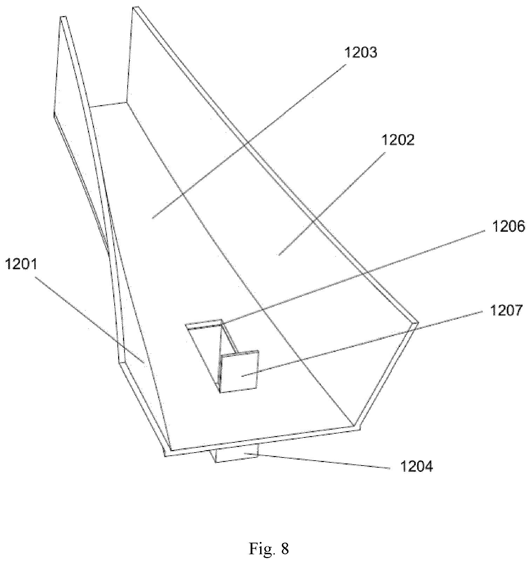

Referring to Fig. 8, in which a second embodiment of the third chute 1203 is shown. The centerline of the inclined bottom plate at the outlet position of the third chute 1203 is provided with a rectangular opening 1206. The edge of the rectangular opening 1206 close to the sample extraction area 1204 (i.e., the end of the rectangular opening) is provided with a blocking plate 1207. The sample extraction area 1204 is located below the rectangular opening 1206. The sample 4 rolls and slides along a straight line on the centerline of the third chute 1203 and falls into the sample extraction area 1204 below from the rectangular opening 1206, whereas due to having a chamfer, the two-piece mold housing component 3 will roll against the third side plate 1201 and the fourth side plate 1202, slides out from the outlet of the third chute 1203 and falls into the housing component collection area.

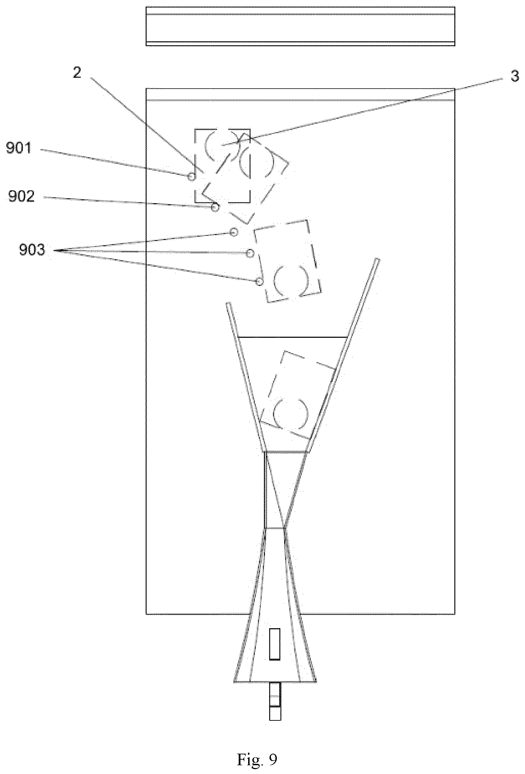

Referring to Fig. 9, the present invention also provides a use method of the automatic separation device, including the following steps:
1) observing the appearance of a sampling probe since the relative positions of a sample inlet 13 and the two-piece mold housing component 3 during the early assembly of the sampling probe are fixed and known, keeping two circular end faces of the flat cylinder formed by the two-piece mold housing component 3 in the combined state perpendicular to the acting direction of a cutting device 5 according to the position of the sample inlet 13, and placing the sample inlet 13 in the horizontal direction, as shown in Fig. 1;
2) a cutting plane is located at the guide channel 6 of the flat cylindrical sample 4 and the two-piece mold housing component 3, and is tangent to the side face of the cylinder formed when the two-piece mold housing component 3 is in the combined state. With reference to the top end of the probe sampling area 2, it is measured that the distance between the top end face of the known probe sampling area 2 and the cutting plane is 91 mm, and the positional relationship between the front end face of the probe sampling area 2 and the cutting device 5 is adjusted so as to be 91 mm apart. The position of the adjusted probe sampling area 2 is marked and recorded on the cutting device 5, so that the probe sampling area 2 is cut at the same position at the subsequent test;
3) preliminarily determining the mounting positions of a constraint collision point 901, a turnover collision point 902, and guide points 903 on the upper surface of the first inclined bottom plate 7 according to the position of the probe sampling area 2 cut by the cutting device 5. The turnover collision point 902 is located at the end of the probe sampling area 2, while the constraining collision point 901 is located at the side of the probe sampling area 2, and the distance between the constraining collision point 901 and the first inclined bottom plate 7 as well as the distance between the turnover collision point 902 and the first inclined bottom plate 7 are both not smaller than the radius of the end face of the probe sampling area 2;
4) adjusting the angle of the first inclined bottom plate 7 to be 30° from the horizontal direction, maintaining the initial angle of the second inclined bottom plate 8 to be consistent with the angle of the first inclined bottom plate 7, and keeping the turnover plate 1003 on the lower surface of the first inclined bottom plate 7 in the closed position, i.e., covering the drop opening 1004;
5) cutting the sampling probe by the cutting device 5, repeating multiple tests, and adjusting a first separation device 10, a second posture adjustment device 11 and a second separation device 12; and
6) after the adjusting step in step 5) is completed, the automatic separation device is put into production.

The adjusting in step 5) specifically includes the following steps:
5.1) observing an overturning posture of the probe sampling area 2, and finely adjusting the constraining collision point 901 so that the constraining collision point is located on the side of the probe sampling area 2; finely adjusting the position of the turnover collision point 902 according to the position of the probe sampling area 2 colliding with the first chute 1005; finely adjusting the turnover collision point to the right if the position of the probe sampling area 2 colliding with the first chute 1005 is located on the first side plate 1001 of the first separation device 10; finely adjusting the turnover collision point to the left if the position of the probe sampling area 2 colliding with the first chute 1005 is located on the second side plate 1002 of the first separation device 10. The position of the probe sampling area 2 colliding with the first chute 1005 is located at the outlet at the lower part of the first chute 1005 after multiple attempts;
5.2) then overturning the turnover plate 1003 on the lower surface of the first inclined bottom plate 7 to observe whether the sample 4 and the two-piece mold housing component 3 can be smoothly separated from the probe sampling area 2; increasing the inclination angle of the first inclined bottom plate 7 if the probe sampling area 2 has fallen out from a drop opening 1004 before the sample 4 and the two-piece mold housing component 3 slide out of the probe sampling area 2 to be separated, so as to provide sufficient impulse for the probe sampling area 2 until the sample 4 and the two-piece mold housing component 3 slide out of the probe sampling area 2 to the second chute 1101, and the paper housing of the probe sampling area 2 falls out of the automatic separation device through the drop opening 1004;
5.3) observing the motion states of the sample 4 and the two-piece mold housing component 3 in the second posture adjustment device 11 and the third chute 1203 of the second separation device 12, and increasing the inclination angle of the second inclined bottom plate 8 if the speed of the sample 4 and the two-piece mold housing component 3 in the third chute 1203 decreases to zero, and the sample 4 and the two-piece mold housing component 3 cannot slide out smoothly due to being jammed in the third chute 1203; reducing the inclination angle of the second inclined bottom plate 8 if the speed of the sample 4 and the two-piece mold housing component 3 is too fast, and the sample 4 and the two-piece mold housing component 3 directly rush out from the third chute 1203 after passing through the second posture adjustment device 11, until the sample 4 and the two-piece mold housing component 3 are smoothly separated at the outlet of the third chute 1203.

It will be appreciated by those skilled in the art that the above-described embodiments are intended to illustrate the present invention and not to limit the present invention, and that variations and modifications made to the above-described embodiments within the true spirit of the invention are intended to fall within the scope of the appended claims.

## Claims

1. An automatic separation device for a sampling probe comprising a probe tail area (1) and a probe sampling area (2) connected to a top of the probe tail area (1), wherein the probe sampling area (2) comprises a housing, a two-piece mold housing component (3) being disposed in the housing, and a sample (4) being disposed inside the two-piece mold housing component (3), and wherein the two-piece mold housing (3) component is wound and fixed by an adhesive tape capable of burning and melting,
the automatic separation device comprising a cutting device (5) for cutting the probe sampling area (2) in the sampling probe, and an inclined bottom plate (7,8),
wherein the inclined bottom plate (7, 8) is inclined downward from the front end to the rear end, with the front end of the inclined bottom plate (7, 8) being close to the cutting device (5) and the rear end of the inclined bottom plate (7, 8) being placed away from the cutting device (5);
**characterised in that** a first posture adjustment device (9), a first separation device (10), a second posture adjustment device (11), and a second separation device (12) are sequentially arranged between the front end of the inclined bottom plate (7, 8) and the rear end of the inclined bottom plate (7, 8), and **in that** the first posture adjustment device (9), the first separation device (10), the second posture adjustment device (11), and the second separation device (12) are mounted on the upper surface of the inclined bottom plate (7, 8).

2. The automatic separation device for a sampling probe according to claim 1, wherein the first posture adjustment device (9) comprises at least two collision points (901, 902) sequentially disposed in a direction from the front end of the inclined bottom plate (7, 8) to the rear end of the inclined bottom plate (7, 8); and/or
the cutting device (5) comprises a shearing device, a squeezing device or a sawing device.

3. The automatic separation device for a sampling probe according to claim 2, wherein the collision points include a turnover collision point (902) and a constraining collision point (901), and wherein the turnover collision point (902) is used for abutting against the end face of the probe sampling area (2), and the constraining collision point (901) is used for abutting against the outer peripheral side of the probe sampling area (2).

4. The automatic separation device for a sampling probe according to claim 3, wherein the distance between the turnover collision point (902) and the constraining collision point (901) on the upper surface of the inclined bottom plate (7, 8) is larger than or equal to the radius of the end face of the probe sampling area (2).

5. The automatic separation device for a sampling probe according to claim 1, wherein the first separation device (10) comprises a first side plate (1001), a second side plate (1002) and a turnover plate (1003),
the first side plate (1001) and the second side plate (1002) are connected to the upper surface of the inclined bottom plate (7, 8), thereby forming a first chute (1005),
the inclined bottom plate located (7, 8) within the first chute (1005) is provided with a drop opening (1004), and the turnover plate (1003) is connected to the lower surface of the inclined bottom plate (7, 8) and covers the drop opening (1004);
the first chute (1005) is arranged as a structure that gradually becomes smaller in a direction from the front end to the rear end of the inclined bottom plate (7, 8), and the minimum size of the outlet of the first chute (1005) is greater than the maximum size of the two-piece mold housing component (3) and smaller than the cross-sectional diameter of the probe sampling area (2).

6. The automatic separation device for a sampling probe according to claim 5, wherein the height of the first side plate (1001) and the height of the second side plate (1002) are both greater than the cross-sectional radius of the probe sampling area (2).

7. The automatic separation device for a sampling probe according to claim 5, wherein the second posture adjustment device (11) comprises a second chute (1101), and the inlet (1103) of the second chute (1101) communicates with the outlet of the first chute (1005).

8. The automatic separation device for a sampling probe according to claim 7, wherein the inner side wall of the second chute (1101) is set as a curved surface (1102) with angle changes.

9. The automatic separation device for a sampling probe according to claim 7, wherein the second separation device (12) comprises a third side plate (1201), a fourth side plate (1202) and a sample extraction area (1204); wherein
the third side plate (1201) and the fourth side plate (1202) are connected to the upper surface of the inclined bottom plate (7, 8), thereby forming a third chute (1203);
the inlet of the third chute (1203) communicates with the outlet (1105) of the second chute (1101);
the sample extraction area (1204) is located at the lower position of the third chute (1203).

10. The automatic separation device for a sampling probe according to claim 9, wherein the third chute (1203) is arranged as a structure that gradually becomes larger in the direction from the front end to the rear end of the inclined bottom plate (7, 8), and the inclination angles of the third side plate (1201) and the fourth side plate (1202) gradually increase in the direction from the front end to the rear end of the inclined bottom plate (7, 8).

11. The automatic separation device for a sampling probe according to claim 10, wherein the size of the inlet of the third chute (1203) is greater than the height of a cylinder formed when the two-piece mold housing component (3) is in a combined state and smaller than the diameter of the cylinder formed when the two-piece mold housing component (3) is in the combined state.

12. The automatic separation device for a sampling probe according to claim 5, wherein the turnover plate (1003) is connected to the lower surface of the inclined bottom plate (7, 8) by means of an adjustable hinge (1006).

13. The automatic separation device for a sampling probe according to claim 9, wherein the lower end of the third chute (1203) is further provided with a partitioning plate (1205).

14. The automatic separation device for a sampling probe according to claim 9, wherein the lower end of the third chute (1203) is provided with a rectangular opening (1206), and the rectangular opening (1206) is provided with a blocking plate (1207) on its edge close to the sample extraction area (1204).

15. The automatic separation device for a sampling probe according to claim 1, wherein the inclined bottom plate includes a first inclined bottom plate (7) and a second inclined bottom plate (8) connected to the rear end of the first inclined bottom plate (7).

16. The automatic separation device for a sampling probe according to claim 1, wherein the inclined bottom plate (7, 8) has an inclination angle of 30°.

17. A use method based on the automatic separation device according to any one of claims 1-16, comprising the following steps:
1) keeping the axial centerline of the sampling probe perpendicular to the acting direction of the cutting device (5);
2) measuring and adjusting a positional relationship between the sampling probe and the cutting device (5) with reference to one end of the sampling probe, and marking and recording the position of the sampling probe after adjustment;
3) preliminarily determining a mounting position of the first posture adjustment device (9) on the inclined bottom plate (7, 8) according to the position of the sampling probe cut by the cutting device (5);
4) adjusting the inclination angle of the inclined bottom plate;
5) repeatedly cutting multiple sampling probes having the same specifications by the cutting device (5), and adjusting the first separation device (10), the second posture adjustment device (11) and the second separation device (12); and
6) determining a final mounting position after the adjusting step in step 5) is completed, thereby obtaining the automatic separation device.

18. The use method according to claim 17, wherein the adjusting in step 5) specifically comprises the following steps:
5.1) observing a collision position of the probe sampling area (2) cut from the sampling probe, adjusting the first posture adjustment device (9) so that the constraining collision point (901) on the first posture adjustment device (9) is located at the side of the probe sampling area (2), and then finely adjusting the position of the constraining collision point (901) on the first separation device (10) according to the position of the probe sampling area (2) colliding with the first chute (1005);
5.2) opening the drop opening (1004), and observing separation of the two-piece mold housing component (3) and the sample (4) in the drop opening (1004); and
5.3) observing motion states of the two-piece mold housing component (3) and the sample (4) in the second posture adjustment device (11) and the second separation device (12), and adjusting the second posture adjustment device (11) and the second separation device (12) until the two-piece mold housing component (3) and the sample (4) are successfully separated from the third chute (1203).

19. The use method according to claim 17, wherein the inclined bottom plate (7, 8) has an inclination angle of 30°.

## Patentansprüche

1. Automatische Trennvorrichtung für eine Probenahmesonde, die einen Sondenendbereich (1) und einen Sondenprobenahmebereich (2) umfasst, der mit einer Oberseite des Sondenendbereichs (1) verbunden ist, wobei der Sondenprobenahmebereich (2) ein Gehäuse umfasst, wobei eine zweiteilige Formgehäusekomponente (3) in dem Gehäuse angeordnet ist und eine Probe (4) innerhalb der zweiteiligen Formgehäusekomponente (3) angeordnet ist und wobei die zweiteilige Formgehäusekomponente (3) mit einem Klebeband umwickelt und befestigt ist, das brennbar und schmelzbar ist,
die automatische Trennvorrichtung umfassend eine Schneidvorrichtung (5) zum Schneiden des Sondenprobenahmebereichs (2) in der Probenahmesonde und eine geneigte Bodenplatte (7,8),
wobei die geneigte Bodenplatte (7, 8) vom vorderen Ende zum hinteren Ende nach unten geneigt ist, wobei sich das vordere Ende der geneigten Bodenplatte (7, 8) nahe an der Schneidvorrichtung (5) befindet und das hintere Ende der geneigten Bodenplatte (7, 8) von der Schneidvorrichtung (5) entfernt angeordnet ist,
**dadurch gekennzeichnet, dass** eine erste Stellungseinstellvorrichtung (9), eine erste Trennvorrichtung (10), eine zweite Stellungseinstellvorrichtung (11) und eine zweite Trennvorrichtung (12) nacheinander zwischen dem vorderen Ende der geneigten Bodenplatte (7, 8) und dem hinteren Ende der geneigten Bodenplatte (7, 8) angeordnet sind und die erste Stellungseinstellvorrichtung (9), die erste Trennvorrichtung (10), die zweite Stellungseinstellvorrichtung (11) und die zweite Trennvorrichtung (12) auf der oberen Oberfläche der geneigten Bodenplatte (7, 8) montiert sind.

2. Automatische Trennvorrichtung für eine Probenahmesonde gemäß Anspruch 1, wobei die erste Stellungseinstellvorrichtung (9) mindestens zwei Kollisionspunkte (901, 902) umfasst, die nacheinander in einer Richtung vom vorderen Ende der geneigten Bodenplatte (7, 8) zum hinteren Ende der geneigten Bodenplatte (7, 8) angeordnet sind und/oder
die Schneidvorrichtung (5) eine Schervorrichtung, eine Quetschvorrichtung oder eine Sägevorrichtung umfasst.

3. Automatische Trennvorrichtung für eine Probenahmesonde gemäß Anspruch 2, wobei die Kollisionspunkte einen Umkehrkollisionspunkt (902) und einen Einschränkungskollisionspunkt (901) umfassen, und wobei der Umkehrkollisionspunkt (902) zum Anliegen an die Endfläche des Sondenprobenahmebereichs (2) verwendet wird und der Einschränkungskollisionspunkt (901) zum Anliegen an die äußere Umfangsseite des Sondenprobenahmebereichs (2) verwendet wird.

4. Automatische Trennvorrichtung für eine Probenahmesonde nach Anspruch 3, wobei der Abstand zwischen dem Umkehrkollisionspunkt (902) und dem Einschränkungskollisionspunkt (901) auf der Oberseite der geneigten Bodenplatte (7, 8) größer oder gleich dem Radius der Endfläche des Sondenprobenahmebereichs (2) ist.

5. Automatische Trennvorrichtung für eine Probenahmesonde nach Anspruch 1, wobei die erste Trennvorrichtung (10) eine erste Seitenplatte (1001), eine zweite Seitenplatte (1002) und eine Umkehrplatte (1003) umfasst,
die erste Seitenplatte (1001) und die zweite Seitenplatte (1002) mit der Oberseite der geneigten Bodenplatte (7, 8) verbunden sind und dadurch eine erste Rutsche (1005) bilden,
die geneigte Bodenplatte (7, 8), die sich innerhalb der ersten Rutsche (1005) befindet, mit einer Fallöffnung (1004) versehen ist und die Umkehrplatte (1003) mit der Unterseite der geneigten Bodenplatte (7, 8) verbunden ist und die Fallöffnung (1004) abdeckt,
die erste Rutsche (1005) ist als eine Struktur angeordnet ist, die in einer Richtung vom vorderen Ende hin zum hinteren Ende der geneigten Bodenplatte (7, 8) allmählich kleiner wird, und die Mindestgröße des Auslasses der ersten Rutsche (1005) größer ist als die Maximalgröße der zweiteiligen Formgehäusekomponente (3) und kleiner ist als der Querschnittsdurchmesser des Sondenprobenahmebereichs (2).

6. Automatische Trennvorrichtung für eine Probennahmesonde nach Anspruch 5, wobei die Höhe der ersten Seitenplatte (1001) und die Höhe der zweiten Seitenplatte (1002) beide größer sind als der Querschnittsradius des Sondenprobenahmebereichs (2).

7. Automatische Trennvorrichtung für eine Probenahmesonde nach Anspruch 5, wobei die zweite Stellungseinstellvorrichtung (11) eine zweite Rutsche (1101) umfasst und der Einlass (1103) der zweiten Rutsche (1101) mit dem Auslass der ersten Rutsche (1005) in Verbindung steht.

8. Automatische Trennvorrichtung für eine Probenahmesonde nach Anspruch 7, wobei die innere Seitenwand der zweiten Rutsche (1101) als gekrümmte Oberfläche (1102) mit Winkeländerungen festgelegt ist.

9. Automatische Trennvorrichtung für eine Probenahmesonde gemäß Anspruch 7, wobei die zweite Trennvorrichtung (12) eine dritte Seitenplatte (1201), eine vierte Seitenplatte (1202) und einen Probennahmebereich (1204) umfasst, wobei
die dritte Seitenplatte (1201) und die vierte Seitenplatte (1202) mit der oberen Oberfläche der geneigten Bodenplatte (7, 8) verbunden sind und dadurch eine dritte Rutsche (1203) bilden,
der Einlass der dritten Rutsche (1203) mit dem Auslass (1105) der zweiten Rutsche (1101) in Verbindung steht,
der Probennahmebereich (1204) an der unteren Position der dritten Rutsche (1203) angeordnet ist.

10. Automatische Trennvorrichtung für eine Probenahmesonde nach Anspruch 9, wobei die dritte Rutsche (1203) als eine Struktur angeordnet ist, die in Richtung vom vorderen Ende hin zum hinteren Ende der geneigten Bodenplatte (7, 8) allmählich größer wird und die Neigungswinkel der dritten Seitenplatte (1201) und der vierten Seitenplatte (1202) in Richtung vom vorderen Ende hin zum hinteren Ende der geneigten Bodenplatte (7, 8) allmählich zunehmen.

11. Automatische Trennvorrichtung für eine Probenahmesonde nach Anspruch 10, wobei die Größe des Einlasses der dritten Rutsche (1203) größer ist als die Höhe eines Zylinders, der gebildet wird, wenn sich die zweiteilige Formgehäusekomponente (3) in einem kombinierten Zustand befindet, und kleiner ist als der Durchmesser des Zylinders, der gebildet wird, wenn sich die zweiteilige Formgehäusekomponente (3) im kombinierten Zustand befindet.

12. Automatische Trennvorrichtung für eine Probenahmesonde nach Anspruch 5, wobei die Umkehrplatte (1003) mittels eines verstellbaren Scharniers (1006) mit der Unterseite der geneigten Bodenplatte (7, 8) verbunden ist.

13. Automatische Trennvorrichtung für eine Probenahmesonde nach Anspruch 9, wobei das untere Ende der dritten Rutsche (1203) des Weiteren mit einer Trennplatte (1205) versehen ist.

14. Automatische Trennvorrichtung für eine Probenahmesonde nach Anspruch 9, wobei das untere Ende der dritten Rutsche (1203) mit einer rechteckigen Öffnung (1206) versehen ist und die rechteckige Öffnung (1206) an ihrer Kante in der Nähe des Probennahmebereichs (1204) mit einer Sperrplatte (1207) versehen ist.

15. Automatische Trennvorrichtung für eine Probenahmesonde nach Anspruch 1, wobei die geneigte Bodenplatte eine erste geneigte Bodenplatte (7) und eine zweite geneigte Bodenplatte (8) umfasst, die mit dem hinteren Ende der ersten geneigten Bodenplatte (7) verbunden ist.

16. Automatische Trennvorrichtung für eine Probenahmesonde nach Anspruch 1, wobei die geneigte Bodenplatte (7, 8) einen Neigungswinkel von 30° aufweist.

17. Verfahren zur Verwendung basierend auf der automatischen Trennvorrichtung gemäß einem der Ansprüche 1 bis 16, umfassend die folgenden Schritte:
1) Halten der axialen Mittellinie der Probenahmesonde senkrecht zur Wirkungsrichtung der Schneidvorrichtung (5),
2) Messen und Einstellen einer Positionsbeziehung zwischen der Probenahmesonde und der Schneidvorrichtung (5) in Bezug auf ein Ende der Probenahmesonde und Markieren und Aufzeichnen der Position der Probenahmesonde nach der Einstellung,
3) vorläufiges Bestimmen einer Montageposition der ersten Stellungseinstellvorrichtung (9) auf der geneigten Bodenplatte (7, 8) entsprechend der Position der von der Schneidvorrichtung (5) geschnittenen Probenahmesonde,
4) Einstellen des Neigungswinkels der geneigten Bodenplatte,
5) wiederholtes Schneiden mehrerer Probenahmesonden mit denselben Spezifikationen durch die Schneidvorrichtung (5) und Einstellen der ersten Trennvorrichtung (10), der zweiten Stellungseinstellvorrichtung (11) und der zweiten Trennvorrichtung (12) und
6) Bestimmen einer endgültigen Montageposition, nachdem der Einstellschritt in Schritt 5) abgeschlossen ist, wodurch die automatische Trennvorrichtung erhalten wird.

18. Verfahren zur Verwendung nach Anspruch 17, wobei das Einstellen in Schritt 5) insbesondere die folgenden Schritte umfasst:
5.1) Beobachten einer Kollisionsposition des von der Probenahmesonde abgeschnittenen Sondenprobenahmebereichs (2), Einstellen der ersten Stellungseinstellvorrichtung (9) derart, dass sich der einschränkende Kollisionspunkt (901) auf der ersten Stellungseinstellvorrichtung (9) an der Seite des Sondenprobenbereichs (2) befindet, und anschließendes Feineinstellen der Position des einschränkenden Kollisionspunkts (901) auf der ersten Trennvorrichtung (10) entsprechend der Position des Sondenprobenahmebereichs (2), der mit der ersten Rutsche (1005) kollidiert,
5.2) Öffnen der Fallöffnung (1004) und Beobachten der Trennung der zweiteiligen Formgehäusekomponente (3) und der Probe (4) in der Fallöffnung (1004) und
5.3) Beobachten der Bewegungszustände der zweiteiligen Formgehäusekomponente (3) und der Probe (4) in der zweiten Stellungseinstellvorrichtung (11) und der zweiten Trennvorrichtung (12) und Einstellen der zweiten Stellungseinstellvorrichtung (11) und der zweiten Trennvorrichtung (12), bis die zweiteilige Formgehäusekomponente (3) und die Probe (4) erfolgreich von der dritten Rutsche (1203) getrennt sind.

19. Verfahren zur Verwendung nach Anspruch 17, wobei die geneigte Bodenplatte (7, 8) einen Neigungswinkel von 30° aufweist.

## Revendications

1. Dispositif de séparation automatique pour une sonde d'échantillonnage comprenant une zone de queue de sonde (1) et une zone d'échantillonnage de sonde (2) reliée à un sommet de la zone de queue de sonde (1), dans lequel la zone d'échantillonnage de sonde (2) comprend un logement, un composant de logement de moule en deux parties (3) étant disposé dans le logement, et un échantillon (4) étant disposé à l'intérieur du composant de logement de moule en deux parties (3), et dans lequel le composant de logement de moule en deux parties (3) est enroulé et fixé par un ruban adhésif apte à brûler et fondre,
le dispositif de séparation automatique comprenant un dispositif de coupe (5) destiné à couper la zone d'échantillonnage de sonde (2) dans la sonde d'échantillonnage, et une plaque de fond inclinée (7, 8),
dans lequel la plaque de fond inclinée (7, 8) est inclinée vers le bas à partir de l'extrémité avant vers l'extrémité arrière, l'extrémité avant de la plaque de fond inclinée (7, 8) étant proche du dispositif de coupe (5) et l'extrémité arrière de la plaque de fond inclinée (7, 8) étant placée à distance du dispositif de coupe (5) ;
**caractérisé en ce qu'**un premier dispositif de réglage de posture (9), un premier dispositif de séparation (10), un second dispositif de réglage de posture (11), et un second dispositif de séparation (12) sont séquentiellement agencés entre l'extrémité avant de la plaque de fond inclinée (7, 8) et l'extrémité arrière de la plaque de fond inclinée (7, 8), et **en ce que** le premier dispositif de réglage de posture (9), le premier dispositif de séparation (10), le second dispositif de réglage de posture (11), et le second dispositif de séparation (12) sont montés sur la surface supérieure de la plaque de fond inclinée (7, 8).

2. Dispositif de séparation automatique pour une sonde d'échantillonnage selon la revendication **1,** dans lequel le premier dispositif de réglage de posture (9) comprend au moins deux points de collision (901, 902) séquentiellement disposés dans une direction à partir de l'extrémité avant de la plaque de fond inclinée (7, 8) vers l'extrémité arrière de la plaque de fond inclinée (7, 8) ; et/ou
le dispositif de coupe (5) comprend un dispositif de cisaillement, un dispositif de compression ou un dispositif de sciage.

3. Dispositif de séparation automatique pour une sonde d'échantillonnage selon la revendication 2, dans lequel les points de collision comportent un point de collision de retournement (902) et un point de collision contraignant (901), et dans lequel le point de collision de retournement (902) est utilisé pour buter contre la face d'extrémité de la zone d'échantillonnage de sonde (2), et le point de collision contraignant (901) est utilisé pour buter contre le côté périphérique externe de la zone d'échantillonnage de sonde (2).

4. Dispositif de séparation automatique pour une sonde d'échantillonnage selon la revendication **3,** dans lequel la distance entre le point de collision de retournement (902) et le point de collision contraignant (901) sur la surface supérieure de la plaque de fond inclinée (7, 8) est supérieure ou égale au rayon de la face d'extrémité de la zone d'échantillonnage de sonde (2).

5. Dispositif de séparation automatique pour une sonde d'échantillonnage selon la revendication 1, dans lequel le premier dispositif de séparation (10) comprend une première plaque latérale (1001), une deuxième plaque latérale (1002) et une plaque de retournement (1003),
la première plaque latérale (1001) et la deuxième plaque latérale (1002) sont reliées à la surface supérieure de la plaque de fond inclinée (7, 8), formant ainsi une première goulotte (1005),
la plaque de fond inclinée (7, 8) située à l'intérieur de la première goulotte (1005) est dotée d'une ouverture de chute (1004), et la plaque de retournement (1003) est reliée à la surface inférieure de la plaque de fond inclinée (7, 8) et recouvre l'ouverture de chute (1004) ;
la première goulotte (1005) est agencée comme une structure qui devient progressivement plus petite dans une direction à partir de l'extrémité avant vers l'extrémité arrière de la plaque de fond inclinée (7, 8), et la taille minimale de la sortie de la première goulotte (1005) est supérieure à la taille maximale du composant de logement de moule en deux parties (3) et inférieure au diamètre de coupe transversale de la zone d'échantillonnage de sonde (2).

6. Dispositif de séparation automatique pour une sonde d'échantillonnage selon la revendication 5, dans lequel la hauteur de la première plaque latérale (1001) et la hauteur de la deuxième plaque latérale (1002) sont toutes deux supérieures au rayon de coupe transversale de la zone d'échantillonnage de sonde (2).

7. Dispositif de séparation automatique pour une sonde d'échantillonnage selon la revendication 5, dans lequel le second dispositif de réglage de posture (11) comprend une deuxième goulotte (1101), et l'entrée (1103) de la deuxième goulotte (1101) communique avec la sortie de la première goulotte (1005).

8. Dispositif de séparation automatique pour une sonde d'échantillonnage selon la revendication 7, dans lequel la paroi latérale interne de la deuxième goulotte (1101) est définie comme une surface incurvée (1102) avec des changements d'angle.

9. Dispositif de séparation automatique pour une sonde d'échantillonnage selon la revendication 7, dans lequel le second dispositif de séparation (12) comprend une troisième plaque latérale (1201), une quatrième plaque latérale (1202) et une zone d'extraction d'échantillon (1204) ; dans lequel
la troisième plaque latérale (1201) et la quatrième plaque latérale (1202) sont reliées à la surface supérieure de la plaque de fond inclinée (7, 8), formant ainsi une troisième goulotte (1203) ;
l'entrée de la troisième goulotte (1203) communique avec la sortie (1105) de la deuxième goulotte (1101) ;
la zone d'extraction d'échantillon (1204) est située au niveau de la position inférieure de la troisième goulotte (1203).

10. Dispositif de séparation automatique pour une sonde d'échantillonnage selon la revendication 9, dans lequel la troisième goulotte (1203) est agencée comme une structure qui devient progressivement plus grande dans la direction à partir de l'extrémité avant vers l'extrémité arrière de la plaque de fond inclinée (7, 8), et les angles d'inclinaison de la troisième plaque latérale (1201) et de la quatrième plaque latérale (1202) augmentent progressivement dans la direction à partir de l'extrémité avant vers l'extrémité arrière de la plaque de fond inclinée (7, 8).

11. Dispositif de séparation automatique pour une sonde d'échantillonnage selon la revendication 10, dans lequel la taille de l'entrée de la troisième goulotte (1203) est supérieure à la hauteur d'un cylindre formé lorsque le composant de logement de moule en deux parties (3) est dans un état combiné et inférieure au diamètre du cylindre formé lorsque le composant de logement de moule en deux parties (3) est dans l'état combiné.

12. Dispositif de séparation automatique pour une sonde d'échantillonnage selon la revendication 5, dans lequel la plaque de retournement (1003) est reliée à la surface inférieure de la plaque de fond inclinée (7, 8) au moyen d'une charnière réglable (1006).

13. Dispositif de séparation automatique pour une sonde d'échantillonnage selon la revendication 9, dans lequel l'extrémité inférieure de la troisième goulotte (1203) est en outre dotée d'une plaque de division (1205).

14. Dispositif de séparation automatique pour une sonde d'échantillonnage selon la revendication 9, dans lequel l'extrémité inférieure de la troisième goulotte (1203) est dotée d'une ouverture rectangulaire (1206), et l'ouverture rectangulaire (1206) est dotée d'une plaque de blocage (1207) sur son bord proche de la zone d'extraction d'échantillon (1204).

15. Dispositif de séparation automatique pour une sonde d'échantillonnage selon la revendication 1, dans lequel la plaque de fond inclinée comporte une première plaque de fond inclinée (7) et une seconde plaque de fond inclinée (8) reliée à l'extrémité arrière de la première plaque de fond inclinée (7).

16. Dispositif de séparation automatique pour une sonde d'échantillonnage selon la revendication 1, dans lequel la plaque de fond inclinée (7, 8) présente un angle d'inclinaison de 30°.

17. Procédé d'utilisation basé sur le dispositif de séparation automatique selon l'une des revendications 1 à 16, comprenant les étapes suivantes :
1) maintenir la ligne centrale axiale de la sonde d'échantillonnage perpendiculaire à la direction d'action du dispositif de coupe (5) ;
2) mesurer et régler une relation de position entre la sonde d'échantillonnage et le dispositif de coupe (5) par rapport à une extrémité de la sonde d'échantillonnage, et marquer et enregistrer la position de la sonde d'échantillonnage après réglage ;
3) déterminer préalablement une position de montage du premier dispositif de réglage de posture (9) sur la plaque de fond inclinée (7, 8) en fonction de la position de la sonde d'échantillonnage coupée par le dispositif de coupe (5) ;
4) régler l'angle d'inclinaison de la plaque de fond inclinée ;
5) couper de manière répétée de multiples sondes d'échantillonnage présentant les mêmes spécifications par le dispositif de coupe (5), et régler le premier dispositif de séparation (10), le second dispositif de réglage de posture (11) et le second dispositif de séparation (12) ; et
6) déterminer une position de montage finale après que l'étape de réglage de l'étape 5) est terminée, ce qui permet d'obtenir le dispositif de séparation automatique.

18. Procédé d'utilisation selon la revendication 17, dans lequel le réglage de l'étape 5) comprend spécifiquement les étapes suivantes :
5,1) observer une position de collision de la zone d'échantillonnage de sonde (2) coupée de la sonde d'échantillonnage, régler le premier dispositif de réglage de posture (9) de sorte que le point de collision contraignant (901) sur le premier dispositif de réglage de posture (9) soit situé au niveau du côté de la zone d'échantillonnage de sonde (2), puis régler finement la position du point de collision contraignant (901) sur le premier dispositif de séparation (10) en fonction de la position de la zone d'échantillonnage de sonde (2) en collision avec la première goulotte (1005) ;
5,2) ouvrir l'ouverture de chute (1004), et observer la séparation du composant de logement de moule en deux parties (3) et de l'échantillon (4) dans l'ouverture de chute (1004) ; et
5,3) observer des états de mouvement du composant de logement de moule en deux parties (3) et de l'échantillon (4) dans le second dispositif de réglage de posture (11) et le second dispositif de séparation (12), et régler le second dispositif de réglage de posture (11) et du second dispositif de séparation (12) jusqu'à ce que le composant de logement de moule en deux parties (3) et l'échantillon (4) soient séparés avec succès de la troisième goulotte (1203).

19. Procédé d'utilisation selon la revendication 17, dans lequel la plaque de fond inclinée (7, 8) présente un angle d'inclinaison de 30°.
